Europäisches Patentamt

European Patent Office

Office européen des brevets

(11) **EP 1 529 990 A1**

(19)

(12) **EUROPEAN PATENT APPLICATION**

(43) Date of publication:
**11.05.2005 Bulletin 2005/19**

(51) Int Cl.⁷: **F16H 61/12**, F16H 59/10,
F02N 11/00

(21) Application number: **04026283.4**

(22) Date of filing: **05.11.2004**

| | |
|---|---|
| (84) Designated Contracting States:<br>**AT BE BG CH CY CZ DE DK EE ES FI FR GB GR<br>HU IE IS IT LI LU MC NL PL PT RO SE SI SK TR**<br>Designated Extension States:<br>**AL HR LT LV MK YU**<br><br>(30) Priority: **06.11.2003 JP 2003376615**<br><br>(71) Applicant: **AISIN AW CO., LTD.**<br>**Anjo-shi, Aichi-ken 444-1192 (JP)**<br><br>(72) Inventors:<br>• **Nakane, Mitsunori**<br>**Anjo-shi Aichi-ken, 444-1192 (JP)** | • **Tsugawa, Masayuki**<br>**Anjo-shi Aichi-ken, 444-1192 (JP)**<br>• **Sugiura, Masayuki**<br>**Anjo-shi Aichi-ken, 444-1192 (JP)**<br>• **Kusafuka, Muneo**<br>**Anjo-shi Aichi-ken, 444-1192 (JP)**<br>• **Suzuki, Kenji**<br>**Anjo-shi Aichi-ken, 444-1192 (JP)**<br><br>(74) Representative: **VOSSIUS & PARTNER**<br>**Siebertstrasse 4**<br>**81675 München (DE)** |

(54) **Start control apparatus and program for a vehicle**

(57)   A start control apparatus includes a position sensor (14), a basic start determination processor, and a sensor output determination processor (53), and a start permission continuation processor (55).

When a power line for supplying electrical current to the starter motor is provided near the position sensor, a magnetic field is generated by the electrical current flowing by starting the starter motor. The magnetic field may affect the Hall IC, and couse errors in the sensor output of the Hall IC, and decrease the performance of the Hall IC.

As a result, even if the shift lever is actually in a position for selecting the engine start range, it may be determined erroneously that the engine start range is not selected due to the errors generated in the sensor output of the Hall IC. In this case, the start of the starter motor is prohibited unintentionally. To avoid this inconvenience, when the start permission signal is generated, the motor is started, and electrical current is supplied to the motor, it is determined whether distinctive variation characteristics are detected in the sensor output. When the distinctive characteristics are detected, permission for the start of the motor is continued. Therefore, the start of the motor is not prohibited when the shift lever is actually in the position for selecting the engine start range, and the engine is started reliably. Thus, the driver does not feel a sence of discomfort.

Further, when a power line is provided near the position sensor, it is not necessary to provide a shield or the like for interrupting the magnetic field for protection.

FIG. 1

EP 1 529 990 A1

**Description**

The present invention relates to a start control apparatus and a program for carrying out a start control method.

In the related art, for example, in a vehicle equipped with a vehicle drive apparatus (power train) such as a stepped automatic transmission, a continuously variable automatic transmission (CVT), a semi-automatic transmission, an electrically driven apparatus using a drive motor as a drive source, and an electrically driven apparatus using the drive motor, an engine and a power generator as drive sources, when a range is selected by a shift lever as a shift control member, a vehicle drive control apparatus for controlling the vehicle drive apparatus turns on and off solenoids or the like in accordance with the transmission logic in the selected range. For this purpose, a position determination apparatus is provided. The position determination apparatus receives an output from a position sensor, i.e., receives the sensor output as an output signal. The position determination apparatus determines a shift position indicating a position of the shift lever based on the output signal to detect the selected range.

In the vehicle, a non-contact sensor is provided as the position sensor having a magnet and a Hall IC or the like. When the shift lever or the like is rotated by the driver, a manual shaft and the magnet attached to the manual shaft are rotated together with the shift lever. The Hall IC generates an analog sensor output in correspondence with the rotation of the magnet (for example, see Japanese Patent Application Laid-Open No. 2001-174212).

For example, in a vehicle equipped with the stepped automatic transmission, a start control apparatus is provided. When it is determined that a range suitable for starting the engine, i.e., an engine start range such as the parking range or the neutral range is selected, in order to start the engine, the start control apparatus outputs a start permission signal, and sends the start permission signal to a motor drive circuit to permit the start of a starter motor. As a result, the motor drive circuit starts the starter motor by supplying electrical current to the starter motor, and drives the engine.

However, in the start control apparatus in the related art, when a power line for supplying electrical current to the starter motor is provided near the position sensor, a magnetic field is generated by the electrical current flowing by starting the starter motor. The magnetic field may affect the Hall IC, and cause errors in the sensor output of the Hall IC, and decrease the performance of the Hall IC.

As a result, even if the shift lever is actually in a position for selecting the engine start range, it may be determined erroneously that the engine start range is not selected due to the errors generated in the sensor output of the Hall IC, the decrease in the performance of the Hall IC, or the like. In this case, the start of the starter motor is prohibited unintentionally.

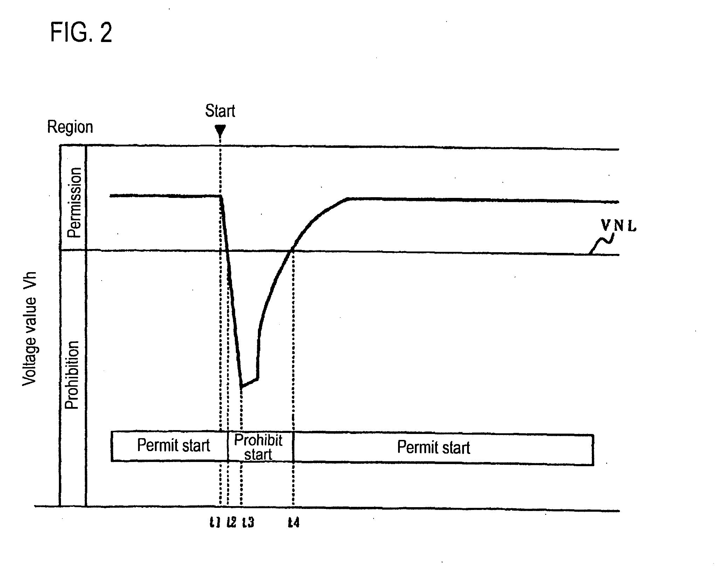

FIG 2 is a time chart showing operation of the start control apparatus in the related art.

In the time chart, Vh denotes a voltage value indicating the sensor output of the Hall IC. When the voltage value Vh is in a permission region, not less than a lower limit value VNL, the start control apparatus permits the start of the starter motor. When the voltage value Vh is less than the lower limit value VNL, i.e., in a prohibition region, the start control apparatus prohibits the start of the starter motor.

That is, when the shift lever is in the position for selecting the engine start range, e.g., in the neutral position, the voltage value Vh (the sensor voltage expressed in volts [v]) is not less than the lower limit value VNL. Therefore, the start control apparatus permits the start of the starter motor. However, a magnetic field is generated when electrical current flows through a power line in accordance with the start of the starter motor at time t1, and the magnetic field affects the Hall IC. When the voltage value Vh becomes less than the lower limit value VNL at time t2, the start control apparatus prohibits the start of the starter motor. Thereafter, the voltage value Vh reaches the minimum value at time t3. When the voltage value Vh reaches the lower limit value VNL at time t4, the start control apparatus permits the start of the starter motor.

As described above, when the voltage value Vh becomes less than the lower limit value VNL, even if the shift lever is in the position for selecting the engine start range, it is determined that the engine start range is not selected, and the start of the starter motor is prohibited. Therefore, the driver feels a sense of discomfort.

The present invention has been made to solve the problem of the start control apparatus in the related art, and an object of the present invention is to provide a start control apparatus and a program for carrying out a start control method in which the start of a motor is not prohibited when a shift control member is actually in a position for selecting an engine start range.

According to the present invention, a start control apparatus comprises a position sensor for generating a sensor output when a range is selected by operating a shift control member; a basic start determination processor for determining whether the sensor output is in a permission region for permitting the start of a motor when an engine start range suitable for starting an engine is selected, and generating a start permission signal for permitting the start of the motor when the sensor output is in the permission region; a sensor output determination processor for determining whether distinctive variation characteristics are detected in the sensor output when the motor is started based on the start permission signal, and electrical current is supplied to the motor; and a start permission continuation processor for continuing permission to start the motor when the variation characteristics are detected.

In the structure, when the start permission signal is generated, the motor is started, and electrical current is supplied to the motor, it is determined whether distinctive variation characteristics are detected in the sensor output. When the distinctive characteristics are detected, permission for the start of the motor is continued. Therefore, the start of the motor is not prohibited when the shift lever is actually in the position for selecting the engine start range, and the engine is started reliably. Thus, the driver does not feel a sense of discomfort.

Further, when a power line is provided near the position sensor, it is not necessary to provide a shield or the like for interrupting the magnetic field for protection. Hereinafter, an embodiment of the present invention will be described in detail with reference to the drawings.

FIG 1 is a block diagram of a start control apparatus according to an embodiment of the present invention;
FIG 2 is a time chart showing operation of a start control apparatus in the related art;
FIG 3 is a view showing operation of a position determination apparatus according to the embodiment of the present invention;
FIG. 4 is a longitudinal sectional view showing main components of the position determination apparatus according to the embodiment of the present invention;
FIG 5 is a cross sectional view showing main components of the position determination apparatus according to the embodiment of the present invention;
FIG 6 is a graph showing input/output characteristics of the position sensor according to the embodiment of the present invention;
FIG 7 is a main flowchart showing operation of a start-processor according to the embodiment of the present invention;
FIG 8 is a flowchart showing subroutine of a start determination process according to the embodiment of the present invention;
FIG 9 is a graph showing a relationship between the input/output characteristics of a position sensor and permission regions and prohibition regions according to the embodiment of the present invention; and
FIG 10 is a time chart showing operation of the start control apparatus according the embodiment of the present invention.

A vehicle may be equipped with a vehicle drive apparatus such as a stepped automatic transmission, a continuously variable automatic transmission and a semi-automatic transmission. In the following description, it is assumed that the vehicle is equipped with the stepped automatic transmission.

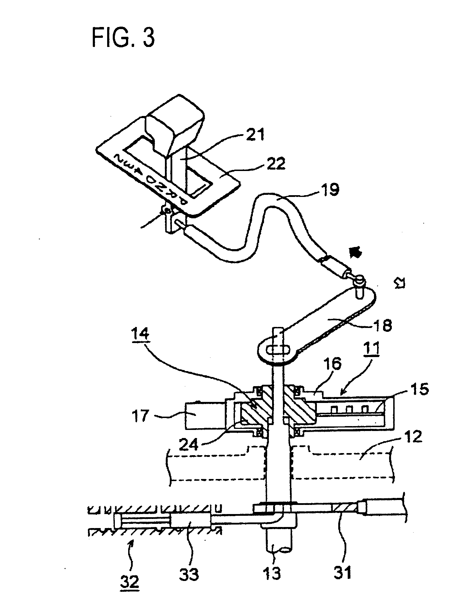

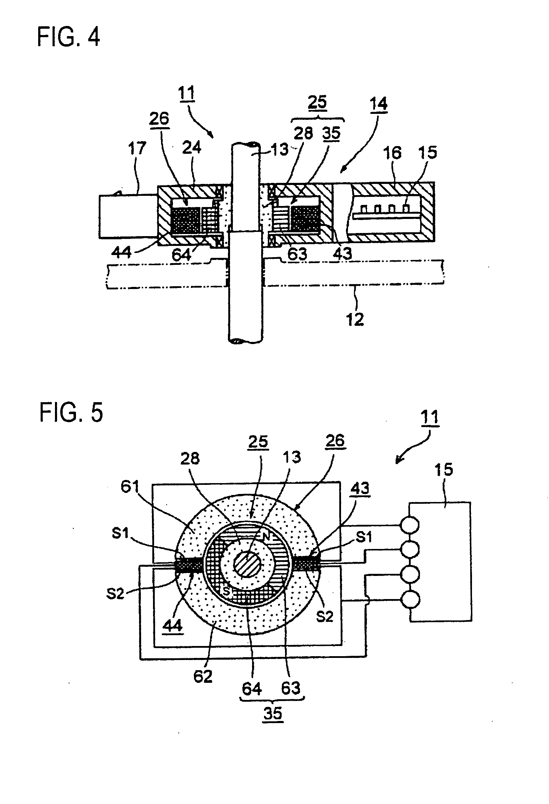

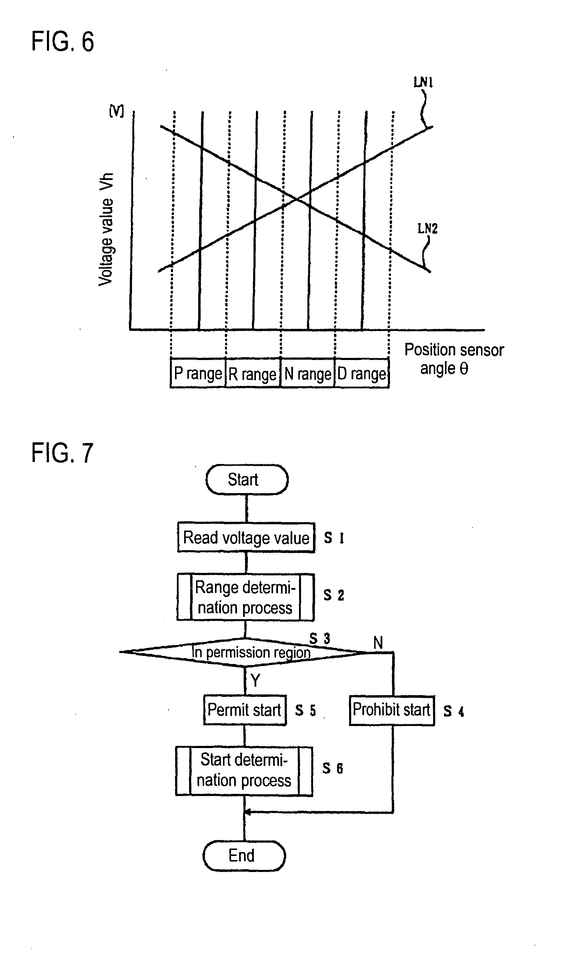

FIG 3 is a view showing operation of a position determination apparatus according to the embodiment of the present invention. FIG 4 is a longitudinal sectional view showing main components of the position determination apparatus according to the embodiment of the present invention. FIG 5 is a cross sectional view showing main components of the position determination apparatus according to the embodiment of the present invention. FIG 6 is a graph showing input/output characteristics of the position sensor according to the embodiment of the present invention. Note that, in FIG 6, the horizontal axis indicates the position sensor angle θ, and the vertical axis indicates the voltage value Vh.

As shown in the drawings, reference numeral 11 denotes the position determination apparatus, reference numeral 12 denotes a case for receiving a transmission apparatus (not shown), reference numeral 13 denotes a manual shaft as a rotation member rotatably attached to the case 12 using a bearing (not shown), and reference numeral 16 denotes a control apparatus case attached to the outside of the case 12. Components such as a position sensor 14, a control module 15, a connector 17 are disposed in the control apparatus case 16. The control module 15 is a vehicle drive control apparatus functioning as an automatic transmission control apparatus. By the connector 17, the control module 15 is connected to a plurality of devices, e.g., an automatic transmission (solenoids such as linear solenoids, and ON/OFF solenoids), controlled in respective control processes by the automatic transmission control apparatus, an engine as a drive source (not shown), indicators, and control elements of the vehicle. The automatic transmission control apparatus includes components such as a CPU, a RAM, and a ROM, and functions as a computer for performing operations based on data recorded in the RAM, ROM or the like to control the automatic transmission. Note that, in the embodiment, the position sensor 14 is received in the control apparatus case 16 disposed in an engine room. Alternatively, the position sensor 14 may be received in a valve body or disposed in a compartment of the vehicle.

The position sensor 14 and the control module 15 are electrically connected with each other. The position sensor 14 and the control module 15 make up a sensor integrated control apparatus.

The manual shaft 13 is connected to an outer lever 18 outside the case 12. The manual shaft 13 is coupled to a shift lever 21 as a shift control member through the outer lever 18, and a control wire 19 as a connection wire, and coupled to a detent 31 in the case 12. The detent 31 is coupled to a valve spool 33 of a manual valve 32. The shift lever 21 is used to select the range of the automatic transmission. For this purpose, the shift lever 21 is rotated (moved) along a guide 22 to select a parking range (P range), a reverse range (R range), a neutral range (N range), a drive range (D range), a fourth speed range, a third speed range, or a second speed range. The parking range and the neutral range are set as engine start ranges for starting the engine. Further, instead of using the shift lever 21, a shift switch or the like which is pressed down in selecting each shift speed may be used as the shift control member.

The position sensor 14 includes a rotation unit 25 and a stationary unit 26. The rotation unit 25 as a unit to be detected is attached to the manual shaft 13 in the control apparatus case 16, and rotated together with the manual shaft 13. The stationary unit 26 as a detector unit is attached to the control apparatus case 16 such that the stationary unit 26 is positioned radially outside the rotation unit 25 to surround the rotation unit 25 in the control apparatus case 16. Further, the rotation unit 25 includes components such as a rotor 28 made of cylindrical soft magnetic material, and an annular magnet 35 attached to the outer circumferential surface of the rotor 28 at a predetermined position in the axial direction of the rotor 28. The stationary unit 26 includes components such as a sensor case 24, and Hall ICs 43, 44 as first and second detection elements received in the sensor case 24. The Hall ICs 43, 44 are spaced from each other at an angle of 180°. Halved fan shaped cores 61, 62 made of soft magnetic material are provided between the Hall ICs 43,44.

The magnet 35 has an N magnetic pole section 63 as a first magnetic pole section and an S magnetic pole section 64 as a second magnetic pole section. Each of the N magnetic pole section 63 and the S magnetic pole section 64 extends over the 180° range in the circumferential direction. The N magnetic pole section 63 and the hall IC 43 form a first sensor unit, and the S magnetic pole section 64 and the Hall IC 44 form a second sensor unit.

The magnetic flux generated by the magnet 35 flows in the cores 61, 62, and flows through the Hall ICs 43, 44 from the N magnetic pole section 63 to the S magnetic pole section 64. The Hall ICs 43, 44 have electromagnetic conversion function to convert the magnetic flux density of the passing magnetic flux into a voltage value Vh, and output the voltage value Vh. In the Hall ICs 43, 44, the magnetic flux flows into, and flows out of the surface substantially perpendicular to the flow of the magnetic flux. In the embodiment, the magnetic flux flows into and flows out of two surfaces S1, S2 facing the cores 61, 62. The magnetic flux does not flow into and flow out of other two surfaces which do not face the cores 61, 62.

The position sensor 14 detects the rotational angle of the rotation unit 25 indicating the operation amount of the shift lever 21, i.e., the position sensor angle θ (rotational angle expressed in degrees) without contact so as to generate one analog signal continuously changing in correspondence with the control amount of the shift lever 21, i.e., a shift position detection signal as a sensor output or the voltage value Vh in the embodiment, and outputs the voltage value Vh.

In this case, the position sensor 14 has linear input/output characteristics. The position sensor 14 generates the voltage value Vh linearly and continuously changing in correspondence with the change (shift of increase or decrease) of the inputted position sensor angle θ based on the operation of the shift lever 21 by the driver. As shown by a line LN1 in FIG 6, the first sensor unit has first input/output characteristics in which the voltage value Vh continuously increases as the position sensor angle θ increases and the voltage value Vh continuously decreases as the position sensor angle θ decreases, and as shown by a line LN2 in FIG 6, the second sensor unit has second input/output characteristics in which the voltage value Vh continuously decreases as the position sensor angle θ increases, and the voltage value Vh continuously increases the position sensor angle θ decreases. Based on the first and second input/ output characteristics, it is possible to detect failures of the Hall ICs 43, 44.

In the automatic transmission using the position determination apparatus 11, by operating the shift lever 21, as described above, one of the parking range, the reverse range, the neutral range, the drive range, the fourth speed range, the third speed range, and the second speed range is selected. The position sensor angles θ of the position sensor 14 and the voltage values Vh corresponding to the respective ranges are set in advance. Based on the previously set voltage values Vh, the shift position indicating the position of the shift lever 21 is determined, and a threshold which is a determination reference value used as a reference for determining the range is expressed.

When the shift lever 21 is operated to rotate along the guide 22, the manual shaft 13 rotates through the control wire 19 and the outer lever 18. The rotation of the manual shaft 13 causes the detent 31 to rotate together with the manual shaft 13. Further, the valve spool 33 coupled to the detent 31 is switched in correspondence with the position of rotation of the manual shaft 13 to generate a range pressure such as a second range pressure, a third range pressure, a fourth range pressure, a D range pressure, and an R range pressure.

When the shift lever 21 is indicated on the guide 22, and the shift lever 21 is selectively positioned in one of the positions P, R, N, D, 4, 3, 2 indicating the respective ranges, the valve spool 33 moves to a valve position previously set in correspondence with the selected position. Thus, the manual valve 32 is set at a hydraulic pressure generation position which has been selectively set, and the automatic transmission is set in the range in correspondence with the hydraulic pressure generation position. In this manner, after the range is set, rotation of the manual shaft 13 is prevented by the detent 31, and the shift lever 21 is held in the shift position.

Next, the start control apparatus for starting a starter motor (not shown) as a motor will be described.

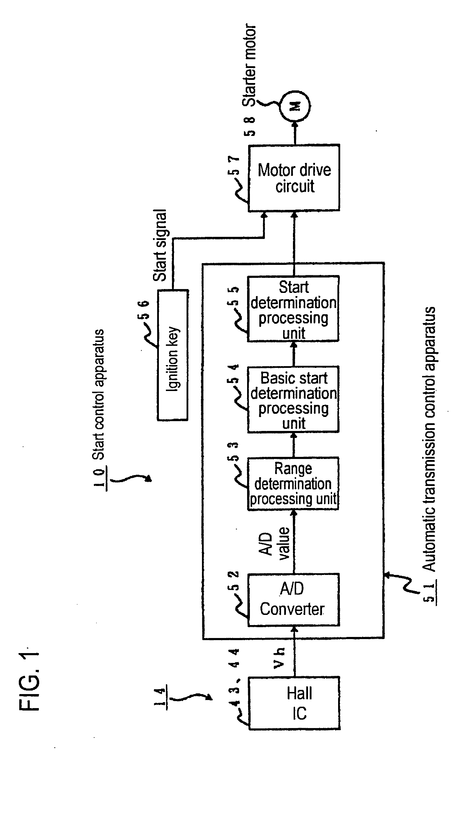

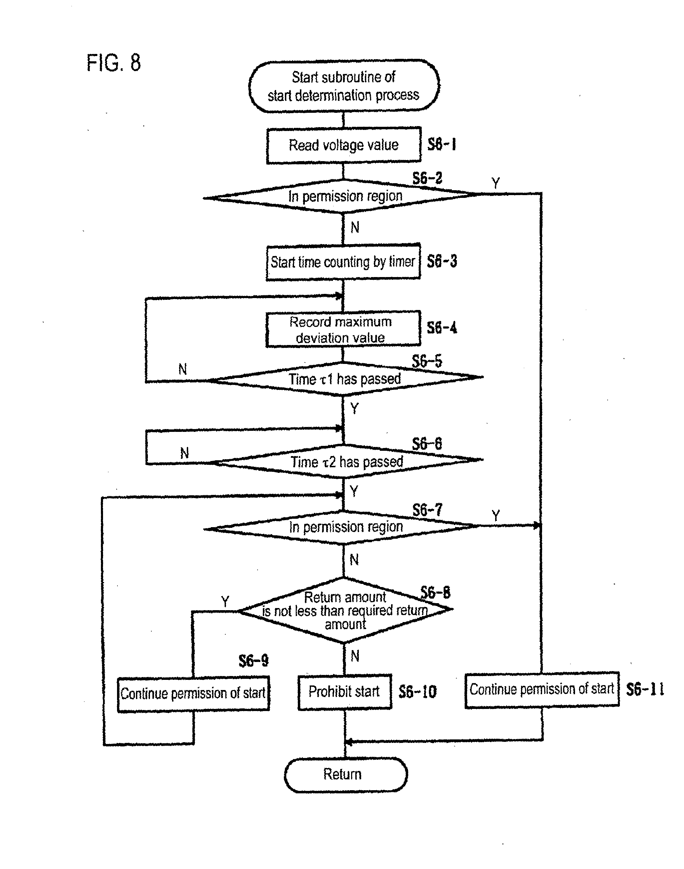

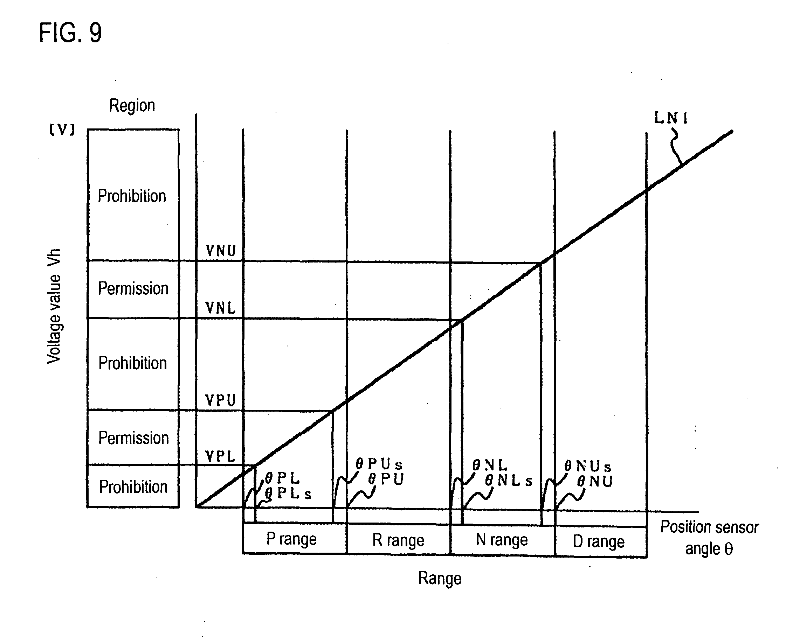

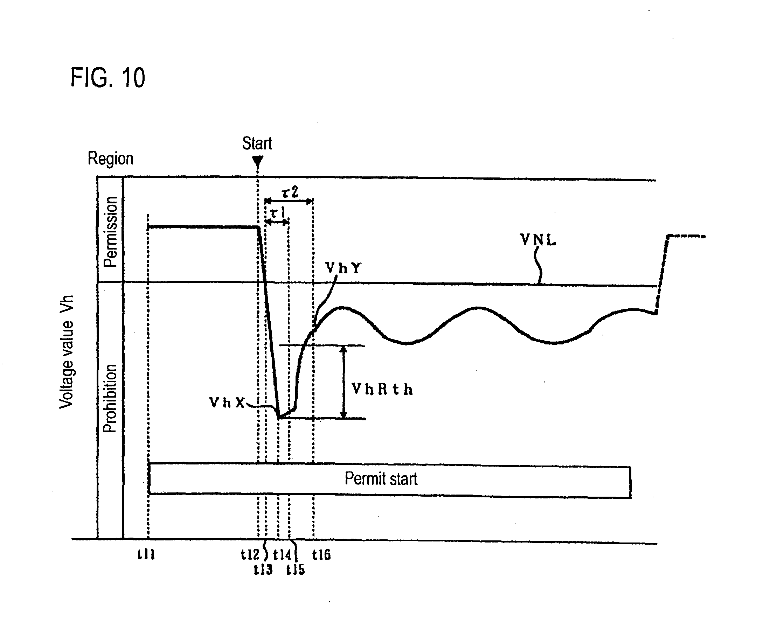

FIG 1 is a block diagram of the start control apparatus according to the embodiment of the present invention. FIG 7 is a main flowchart showing operation of a start processor according to the embodiment of the present invention. FIG 8 is a flowchart showing subroutine of a start determination process according to the embodiment of the present invention. FIG 9 is a graph showing a relationship between the input/output characteristics and permission regions and prohibition regions according to the embodiment of the present invention. FIG 10 is a time chart showing operation of the start control apparatus according the embodiment of the present invention.

In FIG 1, reference numeral 10 denotes the start control apparatus, reference numeral 14 denotes a position sensor, reference numerals 43, 44 denote Hall ICs, reference numeral 51 denotes an automatic. transmission control apparatus, reference numeral 52 denotes an A/D converter, reference numeral 53 denotes a range determination processing unit as a range determination processor, reference numeral 54 denotes a basic start determination processing unit as a basic start determination processor, reference numeral 55 denotes a start determination processing unit as a start determination processor, reference numeral 56 denotes an ignition key, reference numeral 57 denotes a motor drive circuit, and reference numeral 58 denotes a starter motor (M).

In the start control apparatus 10, when the ignition key 56 is turned on, a start signal generated by the ignition key 56 is sent to the motor drive circuit 57.

A start processor (not shown) of the automatic transmission control apparatus 51 performs a start process. The start processor reads the voltage value Vh from the Hall ICs 43, 44. Based on the voltage value Vh, the start processor determines whether the engine start range is selected. If the engine start range is selected, the start processor generates a start permission signal, and sends the start permission signal to the motor drive circuit 57.

When the motor drive circuit 57 receives the start signal from the ignition key 56, the motor drive circuit 57 determines whether the start permission signal is sent from the start determination processing unit 55. If the start permission signal is sent from the start determination processing unit 55, the motor drive circuit 57 supplies electrical current to the starter motor 58 to start the starter motor 58. If the start permission signal is not sent from the start determination processing unit 55, the motor drive circuit 57 does not supply electrical current to the starter motor 58, and does not start the starter motor 58.

Thus, the engine is started when the engine start range is selected. When the engine start range is not selected, the engine is not started even if the ignition key 56 is turned on.

Next, operation of the start processor will be described.

In the embodiment, the start process is performed based on the sensor output from the Hall IC 43. Alternatively, the start process may be performed based on the sensor output from the Hall IC 44 or based on the sensor outputs from both of the Hall ICs 43, 44.

When the position sensor 14 is rotated by rotation of the manual shaft 13 (see FIG 3), the Hall IC 43 generates the voltage value Vh in correspondence with the position sensor angle $\theta$, and outputs the voltage value Vh to the automatic transmission control apparatus 51. When the start processor receives the voltage value Vh, the voltage value Vh is A/D converted by the A/D converter 52 into an A/D value. Subsequently, the range determination processing unit 53 of the start processor performs a range determination process to read the voltage value Vh of the A/D value, and compares the voltage value Vh with the respective thresholds to determine the selected range. Based on the determination result, the range determination processing unit 53 outputs control signals to the respective related devices outside the control apparatus case 16 through corresponding terminals of the connector 17 for controlling the related devices.

Thus, based on instructions from the automatic transmission control apparatus 51, various controls such as an automatic transmission control, an engine control and an indicator control can be performed.

Thereafter, the basic start determination processing unit 54 of the start processor performs a basic start determination process to read the voltage value Vh, and determines whether the voltage value Vh has been set in correspondence with the engine start range, and the voltage value Vh is in the permission region where the start of the starter motor 58 is permitted.

As shown in FIG 9, the range of the position sensor angle $\theta$ assigned to the parking range is represented by the following expression.

$$\theta PL \leq \theta \leq \theta PU$$

However, the permission region in the parking range is narrower than the above range, and represented by the following expression.

$$\theta PLs \leq \theta \leq \theta PUs$$

Further, the voltage value Vh corresponding to the permission region is determined based on the characteristics expressed by the line LN1, and represented by the following expression.

$$VPL \leq Vh \leq VPU$$

In the expression, VPL indicates a lower limit value as a first region border value and VPU indicates an upper limit value as a second region border value.

The range of the position sensor angle $\theta$ assigned to the neutral range is represented by the following expression.

$$\theta NL \le \theta \le \theta NU$$

However, the permission region in the neutral range is narrower than the above range, and represented by the following expression.

$$\theta NLs \le \theta \le \theta NUs$$

Further, the voltage value Vh corresponding to the permission region is determined based on the characteristics expressed by the line LN1, and represented by the following expression.

$$VNL \le Vh \le VNU$$

In the expression, VNL indicates a lower limit value as a first region border value of the voltage value Vh and VNU indicates an upper limit value as a second region border value of the voltage value Vh.

If the voltage value Vh is in the permission region of the engine start range, the basic start determination processing unit 54 permits the start of the starter motor 58, and generates a start permission signal. If the voltage value Vh is not in the permission region of the engine start range, the voltage value Vh is in a prohibition region in which the start of the starter motor 58 is prohibited, and the basic start determination processing unit 54 prohibits the start of the starter motor 58.

When a power line for supplying electrical current to the starter motor 58 is provided near the position sensor 14, a magnetic field is generated by the electrical current flowing by the start of the starter motor 58. The magnetic field affects the Hall ICs 43, 44 to cause errors in the sensor outputs of the Hall ICs 43, 44 or decrease the performance of the Hall ICs 43, 44. As a result, even if the shift lever 21 is actually in the position for selecting the engine start range, when the voltage value Vh is deviated from the permission region due to the errors caused by the sensor output of the Hall ICs 43, 44 or the decrease in the performance of the Hall ICs 43, 44, the start of the starter motor 58 is prohibited.

In particular, since the automatic transmission is provided adjacent to the engine, the position determination apparatus 11 provided at the automatic transmission and the starter motor 58 for starting the engine are positioned close to each other. As a result, it is highly likely that the magnetic field generated by the power line for supplying electrical current to the starter motor 58 affects the Hall ICs 43, 44.

In this case, as described above, when the basic start determination processing unit 54 determines that the voltage value Vh is in the permission region of the engine start range, the start permission signal is generated, and the motor drive circuit 57 supplies electrical current to the starter motor 58, and the starter motor 58 is temporarily started. However, if the magnetic field generated by the power line affects the Hall IC 43, since the start of the starter motor 58 is prohibited while the engine is not started, the driver feels a sense of discomfort.

Therefore, in the basic start determination process, if it is determined that the voltage value Vh is in the permission region of the engine start rage, and the start of the starter motor 58 is permitted, the start determination processing unit 55 of the start processor performs a start determination process to determine whether distinctive variation characteristics are detected in the voltage value Vh. The distinctive variation characteristics appear when rush current is generated immediately after the start of the starter motor 58. Based on the determination result, the start determination processing unit 55 continues to permit the start operation or prohibits the start operation.

That is, when the start of the starter motor 58 is permitted, the start determination processing unit 55 reads the voltage value Vh at time t11 in FIG 10, and determines whether the voltage value Vh is in the permission region of the engine start range. If the voltage value Vh is in the engine start range, e.g., in the permission region of the neutral range, a start permission continuation processor (not shown) of the start determination processing unit 55 performs a start permission continuation process to continue to permit the start operation.

Then, when the starter motor 58 is started at time t12, as the electrical current supplied to the starter motor 58 flows through the power line, the Hall IC 43 is affected by the magnetic field, and the decrease of the voltage value Vh is started. Then, when the voltage value Vh become less than the lower limit value VNL at time t13, and the voltage value Vh falls out of the permission region of the neutral range, a deviation value calculation processor (not shown) of the start determination processing unit 55 performs a deviation value calculation process to start time counting using a timer (not shown) equipped in the automatic transmission control apparatus 51, calculates the minimum value (or the maximum value) of the voltage value Vh, and records the calculated value in the RAM. In the meanwhile, the permission for the start of the starter motor 58 is continued.

After a predetermined time τ1 has passed at time t15 since the start of time counting by the timer, the minimum value (or the maximum value) which is most deviated from the lower limit value VNL (or the upper limit value VNU) between time t13 to time t15 is calculated as the largest deviated value VhX, and the value is recorded in the RAM. In the embodiment, the voltage value Vh at time t14 is recorded as the largest deviation value VhX.

In FIG 10, since the voltage value Vh decreases as the electrical current supplied to the starter motor 58 flows through the power line, the minimum value is calculated as the maximum deviation value VhX. However, depending on the direction of the power line, the voltage value Vh increases as the electrical current supplied to the starter motor 58 flows through the power line. In this case, therefore, the maximum value is calculated as the maximum deviation value VhX.

The voltage value Vh changes according to the distinctive characteristics due to the generation of rush current immediately after the start of the starter motor 58. The voltage value Vh is sharply deviated from the lower limit value VNL (or the upper limit value VNU) of the permission region to reach the minimum value (or the maximum value). Then, the value returns like a quadratic function.

In the embodiment, whether it is possible to detect the distinctive variation characteristics in the voltage value Vh is determined based on the condition where the voltage value Vh falls out of the permission region and returns.

Thus, after the start of time counting by the timer, when the time τ2 set in advance has passed at time t16, a return amount determination processor as a sensor output determination processor (not shown) of the start determination processing unit 55 performs a return amount determination process as a sensor output determination process to calculate the return amount VhR expressed by the absolute value of the difference between the current value VhY indicating the current voltage value Vh at the time t16 and the maximum deviation value VhX as represented by the following expression.

$$VhR = |VhY - VhX|$$

Then, the return amount determination processor reads the lower limit value VNL (or the upper limit value VNU) and the maximum deviation amount VhX to calculate a required return amount VhRth indicating the returning condition required for detecting the variation characteristics in accordance with a predetermined return ratio γ by the following expression.

$$VhRth = |VNL - VhX| \times \gamma$$

The return amount determination processor determines whether the return amount VhR is not less than the required return amount VhRth indicating the threshold. If the return amount VhR is not less than the required return amount VhRth indicating the threshold, the return amount determination processor detects the distinctive variation characteristics in the voltage value Vh, and the start permission continuation processor continues to permit the start operation. If the return amount VhR is less than the required return amount VhRth, the return amount determination processor does not detect the distinctive variation characteristics in the voltage value Vh, and a start prohibition processor (not shown) of the start determination processing unit 55 performs a start prohibition process to prohibit the start operation.

As described above, if the return amount VhR is not less than the required return amount VhRth, the variation of the voltage value Vh indicates variation characteristics due to generation of rush current immediately after the start of the starter motor 58. Since the permission for the start of the starter motor 58 is continued, when the shift lever 21 is actually in the position for selecting the engine start range, the start of the starter motor 58 is not prohibited, and thus, the engine is reliably started. Therefore, the driver does not feel a sense of discomfort.

Further, when the power line is provided near the Hall ICs 43, 44, it is not necessary to provide a shield or the like for interrupting the magnetic field for protection.

Next, a flowchart shown in FIG 7 will be described. In step S1, the voltage value Vh is read. In step S2, the range determination process is performed. In step S3, it is determined whether the voltage value Vh is in the permission region. If it is determined that the voltage value Vh is in the permission region, the routine proceeds to step S5. If it is determined that the voltage value Vh is not in the permission region, the routine proceeds to step S4. In step S4, the start operation is prohibited, and the process is finished. In step S5, the start operation is permitted. In step S6, the start determination process is carried out, and the routine is finished.

Next, a flowchart of FIG 8 will be described. In step S6-1, the voltage value Vh is read. In step S6-2, it is determined whether the voltage value Vh is in the permission region. If it is determined that the voltage value Vh is in the permission region, the routine proceeds to step S6-11. If it is determined that the voltage value Vh is not in the permission region, the routine proceeds to step S6-3. In step S6-3, time counting by the timer is started. In step S6-4, the maximum deviation value VhX is recorded. In step S6-5, it is determined whether the time τ1 has passed. If it is determined that the time τ1 has passed, the routine proceeds to step S6-6. If it is determined that the time τ1 has not passed, the routine goes back to step S6-4. In step S6-6, passage of the time τ2 is awaited. When the time τ2 has passed, the routine proceeds to step S6-7. In step S6-7, it is determined whether the voltage value Vh is in the permission region. If the voltage value Vh is in the permission region, the routine proceeds to step S6-11. If the voltage value Vh is not in the permission region, the routine proceeds to step S6-8. In step 6-8, it is determined whether the return amount VhR is not less than the required return amount VhRth. If the return amount VhR is not less than the required return amount VhRth, the routine proceeds to step S6-9. If the return amount VhR is less than the required return amount VhRth, the routine proceeds to step S6-10. In step S6-9, the permission for the start operation is continued, and the routine returns. In step S6-10, the start operation is prohibited, and the routine goes back to step S6-7. In step S6-11, the permission for the start operation is continued, and the routine returns.

The embodiment has been described in conjunction with the vehicle equipped with the stepped automatic transmission, continuously variable automatic transmission, the semi-automatic transmission, and the like, in which the engine is started by starting the starter motor 58. Further, the present invention is applicable to a start control apparatus for a vehicle equipped with an electrical drive apparatus using a drive motor as a drive source, an electrical drive apparatus using the drive motor, the engine and a power generator as drive sources, and the like, in which the engine is started by starting the drive motor.

It should be noted that the present invention is not limited to the above-described embodiment. Various modifications to the embodiment are possible within the spirit of the present invention, and such modifications are within the scope of the present invention.

**Claims**

1. A start control apparatus comprising:

a position sensor for generating a sensor output when a range is selected by operating a shift control member;
a basic start determination processor for determining whether the sensor output is in a permission region for permitting the start of a motor when an engine start range suitable for starting an engine is selected, and generating a start permission signal when the sensor output is in the permission region;
a sensor output determination processor for determining whether distinctive variation characteristics are detected in the sensor output when the motor is started based on the start permission signal for permitting the start of the motor, and electrical current is supplied to the motor; and
a start permission continuation processor for continuing permission to start the motor when the variation characteristics are detected.

2. The start control apparatus according to claim 1, wherein the sensor output determination processor determines whether the variation characteristics are detected based on a condition in which the sensor output falls out of the permission region and returns.

3. The start control apparatus according to claim 1 or 2, wherein the sensor output determination processor calculates a return amount of the sensor output based on a current value indicating the sensor output when a predetermined time has passed since the sensor output falls out of the permission region, and the maximum deviation value indicating the sensor output most deviated from a border value of the permission region, and detects the variation characteristics when the return amount is not less than the required return amount.

4. The start control apparatus according to any one of claims 1 to 3, wherein the motor is a starter motor.

5. A program for carrying out a start control method, the program allowing a computer to have functions of:

a basic start determination processor for determining whether a sensor output generated from a position sensor by operating a shift control member to select a range is in a permission region for permitting the start of a motor when an engine start range suitable for starting an engine is selected, and generating a start permission signal when the sensor output is in the permission region;
a sensor output determination processor for determining whether distinctive variation characteristics are detected in the sensor output when the motor is started based on the start permission signal, and electrical current is supplied to the motor; and
a start permission continuation processor for continuing permission to start the motor when the variation characteristics are detected.

FIG. 1

10 Start control apparatus

14

56 Ignition key — Start signal

43, 44 Hall IC — Vh

52 A/D Converter — A/D value

53 Range determination processing unit

54 Basic start determination processing unit

55 Start determination processing unit

57 Motor drive circuit

58 Starter motor — M

51 Automatic transmission control apparatus

FIG. 2

FIG. 3

FIG. 4

FIG. 5

FIG. 6

Position sensor angle θ

| P range | R range | N range | D range |

FIG. 7

Start

Read voltage value S 1

Range determi- S 2
nation process

S 3
In permission region N

Y

Permit start S 5    Prohibit start S 4

Start determi- S 6
nation process

End

FIG. 8

```
        ┌─────────────────────────────┐
        │   Start subroutine of       │
        │ start determination process │
        └─────────────────────────────┘
                      │
        ┌─────────────────────────┐
        │   Read voltage value    │  S6-1
        └─────────────────────────┘
                      │
                   S6-2          Y
              ◇ In permission region ◇─────────────────┐
                      │ N                               │
        ┌─────────────────────────┐                     │
        │ Start time counting by timer │  S6-3          │
        └─────────────────────────┘                     │
              │←──────────────────┐                     │
        ┌─────────────────────────┐                     │
        │    Record maximum       │  S6-4               │
        │    deviation value      │                     │
        └─────────────────────────┘                     │
              N          S6-5                            │
        ◇──── Time τ1 has passed ◇─┘                    │
              │ Y                                        │
              │←──────────────────┐                     │
              N          S6-6      │                     │
        ◇──── Time τ2 has passed ◇─┘                    │
              │ Y                                        │
        ┌─────│                                          │
        │     N          S6-7          Y                 │
        │  ◇ In permission region ◇────────────────────→│
        │        │ N                                     │
        │     Return amount      S6-8                    │
        │  ◇ is not less than required return ◇          │
        │   Y    amount                                  │
        ┌─┘      │ N                                      │
        │        │                                        │
  S6-9  │  S6-10 │                          S6-11         │
┌───────────┐ ┌──────────────┐      ┌────────────────────────┐
│ Continue  │ │ Prohibit start│      │ Continue permission of start │
│ permission│ └──────────────┘      └────────────────────────┘
│ of start  │        │                          │
└───────────┘        │←─────────────────────────┘
        │            │
        └───────→┌────────┐
                 │ Return │
                 └────────┘
```

EP 1 529 990 A1

FIG. 9

Region

[V]

Prohibition

VNU

Permission

VNL

Prohibition

VPU

Permission

VPL

Prohibition

Voltage value Vh

LN I

$\theta PL$
$\theta PLs$

$\theta PUs$
$\theta PU$

$\theta NL$
$\theta NLs$

$\theta NUs$
$\theta NU$

P range | R range | N range | D range

Position sensor angle $\theta$

Range

FIG. 10

**European Patent Office**

## EUROPEAN SEARCH REPORT

Application Number

EP 04 02 6283

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 101 30 230 A (BOSCH GMBH ROBERT) 2 January 2003 (2003-01-02) * figures 2,3 * ----- | 1,2,4,5 | F16H61/12 F16H59/10 F02N11/00 |
| X | US 6 205 390 B1 (HOLBROOK GERALD L ET AL) 20 March 2001 (2001-03-20) * column 5, lines 1-15; claim 1; figure 2 * ----- | 1,2,4,5 | |
| X | DE 197 32 924 A (LUK GETRIEBE SYSTEME GMBH) 12 February 1998 (1998-02-12) * column 18, lines 10-18 * * column 15, lines 31-51; figures 1,2,7,13,18 * ----- | 1,2,4,5 | |
| P,A | DE 102 32 165 A (BOSCH GMBH ROBERT) 12 February 2004 (2004-02-12) * paragraphs [0002], [0020], [0021]; claims 1-3; figure 2 * ----- | 3 | |

TECHNICAL FIELDS SEARCHED (Int.Cl.7)

F16H
F02N

The present search report has been drawn up for all claims

| Place of search | Date of completion of the search | Examiner |
|---|---|---|
| Munich | 14 January 2005 | Ulivieri, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 02 6283

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2005

| Patent document cited in search report | | Publication date | Patent family member(s) | | Publication date |
|---|---|---|---|---|---|
| DE 10130230 | A | 02-01-2003 | DE | 10130230 A1 | 02-01-2003 |
| | | | WO | 03001085 A1 | 03-01-2003 |
| | | | EP | 1402204 A1 | 31-03-2004 |
| | | | JP | 2004530849 T | 07-10-2004 |
| | | | US | 2004079181 A1 | 29-04-2004 |
| US 6205390 | B1 | 20-03-2001 | NONE | | |
| DE 19732924 | A | 12-02-1998 | DE | 19732924 A1 | 12-02-1998 |
| | | | BR | 9704263 A | 01-12-1998 |
| | | | FR | 2792581 A1 | 27-10-2000 |
| | | | FR | 2752547 A1 | 27-02-1998 |
| | | | GB | 2317660 A ,B | 01-04-1998 |
| | | | IT | MI971890 A1 | 06-02-1998 |
| | | | NO | 973523 A | 09-02-1998 |
| DE 10232165 | A | 12-02-2004 | DE | 10232165 A1 | 12-02-2004 |